Europäisches Patentamt

(19) European Patent Office

Office européen des brevets

(11) Veröffentlichungsnummer: **0 047 865**
**B1**

(12) **EUROPÄISCHE PATENTSCHRIFT**

(45) Veröffentlichungstag der Patentschrift:
27.03.85

(21) Anmeldenummer: 81106335.3

(22) Anmeldetag: 14.08.81

(51) Int. Cl.⁴: **C 08 G 12/40, D 06 M 15/43,**
**C 09 K 21/14, D 21 H 5/00,**
**C 09 D 5/18, C 08 K 5/00,**
**C 08 G 12/16**

(54) Verfahren zur Herstellung von Flammschutzmitteln, die dabei erhaltenen Flammschutzmittel und deren Verwendung.

(30) Priorität: 11.09.80 DE 3034119

(43) Veröffentlichungstag der Anmeldung:
24.03.82 Patentblatt 82/12

(45) Bekanntmachung des Hinweises auf die Patenterteilung:
27.03.85 Patentblatt 85/13

(84) Benannte Vertragsstaaten:
**BE CH DE FR GB IT LI NL**

(56) Entgegenhaltungen:
**DE - C - 640 890**
**DE - C - 969 419**
**GB - A - 476 043**
**GB - A - 649 642**
**GB - A - 904 954**
**US - A - 3 887 511**

**Die Akte enthält technische Angaben, die nach dem Eingang der Anmeldung eingereicht wurden und die nicht in dieser Patentschrift enthalten sind.**

(73) Patentinhaber: **Chemische Fabrik Pfersee GmbH,**
**Färberstrasse 4, D-8900 Augsburg (DE)**

(72) Erfinder: **Pusch, Günter, Weidachstrasse 6,**
**D-8901 Leitershofen (DE)**
Erfinder: **Walz, Dieter, Iselerweg 14, D-8901 Diedorf (DE)**

## Beschreibung

Die vorliegende Erfindung beinhaltet ein Verfahren zur Herstellung von Flammschutzmitteln auf Basis von Dicyandiamid, Ammonphosphaten und Formaldehyd, beschreibt weiterhin die dabei erhaltenen Flammschutzmittel und deren Verwendung. Besonders hervorgehoben werden dabei Flammschutzmittelformulierungen, die durch Zugabe von Polyacrylaten erhalten werden.

Die Herstellung von Flammschutzmitteln auf Basis von Dicyandiamid, Ammonphosphaten bzw. Phosphorsäure und Ammoniak und Formaldehyd ist seit langem bekannt. In der britischen Patentschrift 648 883 werden u. a. derartige Produkte erwähnt. Auch in der FR-PS 791 983 ( = DE-C-640 890) ist die Herstellung von solchen Flammschutzmitteln beschrieben. Es werden nach diesem Stand der Technik aber die einzelnen Komponenten in anderen Molverhältnissen miteinander umgesetzt, und auch die Umsetzungszeit und die Umsetzungstemperatur sind relativ kurz bzw. niedrig gewählt. Die bekannten Mittel haben daher generell den Nachteil der mangelnden Stabilität und der ungenügenden Verträglichkeit mit Polyacrylatdispersionen. Gerade aber die Herstellung von fertigen Compounds ist heute eine wesentliche Anforderung des Marktes, um die Lagerhaltung und Ausrüstung zu vereinfachen und damit zu verbilligen.

Es war die Aufgabe der vorliegenden Erfindung, die Nachteile des Standes der Technik auszuräumen, d. h. stabile Flammschutzmittel auf Basis von Dicyandiamid, Ammonphosphaten und Formaldehyd herzustellen, die zudem mit Polyacrylatdispersionen gut verträglich sind. Diese Aufgabe wurde dadurch gelöst, daß Dicyandiamid, Mono-, Diammonphosphat und Formaldehyd in ganz bestimmten Molverhältnissen längere Zeit bei erhöhter Temperatur zur Reaktion gebracht werden, wobei sich ein bestimmter pH-Wert einstellt.

Die vorliegende Erfindung beschreibt also ein Verfahren zur Herstellung von Flammschutzmitteln aus Dicyandiamid, Ammonphosphaten und Formaldehyd, das dadurch gekennzeichnet ist, daß Dicyandiamid, Mono-, Diammonphosphat und Formaldehyd im Molverhältnis von 1 : 1,0 bis 1,7 : 0,03 bis 0,4 : 2,2 bis 3,2 mindestens 1,5 Stunden auf mindestens 95°C erhitzt werden, wobei sich ein pH-Wert von mindestens 3,8 einstellt.

Außerdem werden die auf diese Weise hergestellten Flammschutzmittel und weiterhin die unter Zusatz von Polyacrylatdispersionen erhaltenen Formulierungen der Flammschutzmittel unter Schutz gestellt. Schließlich wird noch die Verwendung dieser Mittel beansprucht.

Das Dicyandiamid wird in technischer Qualität verwendet. Auch Mono- und Diammonphosphat liegen in technischer Qualität vor.

Der Formaldehyd kommt in Form wäßriger Lösungen zum Einsatz. Diese Lösungen enthalten in der Regel 30 bis 40 Gew.-% Formaldehyd und geringe Mengen an Ameisensäure und gegebenenfalls Methanol sowie die üblichen Stabilisatoren. Um ein gut rührbares System zu erhalten, wird vorzugsweise 30gew.-%ige Formaldehydlösung verwendet.

Die Ausgangskomponenten Dicyandiamid, Mono- und Diammonphosphat, sowie Formaldehyd werden im Molverhältnis 1 : 1,0 bis 1,7 : 0,03 bis 0,4 : 2,2 bis 3,2, insbesondere im Molverhältnis 1 : 1,1 bis 1,5 : 0,1 bis 0,3 : 2,5 bis 3,0 miteinander umgesetzt. Gegebenenfalls wird noch etwas Wasser zur Verflüssigung und damit besseren Rührbarkeit des Systems zugefügt.

Die Reaktionstemperatur liegt bei mindestens 95°C, wobei die Reaktion bevorzugt bei 98°C bis Rückflußtemperatur (entspricht je nach Molverhältnis einer Endtemperatur von 100 bis 102°C), und ganz besonders bevorzugt bei Rückflußtemperatur vorgenommen wird.

Neben dem Molverhältnis und der Reaktionstemperatur ist als weiterer erfindungswesentlicher Parameter für den vorliegenden Gegenstand die Reaktionszeit zu nennen. Die genannten Substanzen läßt man bei der angegebenen Temperatur 1,5 bis 8 Stunden reagieren, um wirklich beständige Flammschutzmittel zu erhalten. Bevorzugt ist eine Reaktionszeit von 3 bis 8 Stunden, ganz besonders bevorzugt eine Reaktionszeit von 4 bis 6 Stunden.

Schließlich ist noch ein besonderes Charakteristikum des erfindungsgemäßen Verfahrens in der Änderung des pH-Wertes zu sehen. Werden die Ausgangssubstanzen zusammengegeben und langsam erwärmt, so fällt der pH-Wert in Abhängigkeit des eingesetzten Molverhältnisses zuerst einmal auf etwa 2,0 bis 3,0 ab. Wird dann mindestens auf die geforderten 95°C, vorzugsweise 98°C bis Rückflußtemperatur erhitzt, so steigt der pH-Wert langsam an. Die Reaktion ist beendet, wenn der pH-Wert mindestens den Wert 3,8, bevorzugt einen Wert von 4,2 bis 5,5, ganz besonders bevorzugt einen Wert von 4,5 bis 5,2 erreicht hat.

Die wie beschrieben hergestellten Flammschutzmittel sind für viele Zwecke, insbesondere für die Flammfestbehandlung von z. B. Papier, aber auch von Cellulose- und cellulosehaltigen Textilien, häufig direkt einsetzbar.

Für einige Anwendungsbereiche, insbesondere im Rahmen der Flammfest- und gleichzeitigen Griffausrüstung, ist aber eine gemeinsame Anwendung der Flammschutzmittel mit Polyacrylaten angebracht und notwendig. Es ist dabei selbstverständlich möglich, die Flammschutzmittel und die Polyacrylatdispersionen erst vor der Anwendung zu vermischen. Diese Arbeitsweise ist insbesondere dann angezeigt, wenn die beiden Bestandteile nur beschränkt miteinander verträglich sind. Die erfindungsgemäß hergestellten Flammschutzmittel haben aber den großen Vorteil der sehr guten Verträglichkeit mit Polyacrylatdispersionen, und es ist deshalb möglich, die Mischung der Flammschutzmittel mit den

**0 047 865**

Polyacrylatdispersionen von vornherein vorzunehmen, wobei üblicherweise zur Erreichung guter Laufeigenschaften in der Praxis die Polyacrylatdispersionen mit geringen Mengen an nichtionogenen Dispergiermitteln versetzt werden. Dem Markt werden somit fertige Formulierungen zur Verfügung gestellt. Diese Formulierungen sind einfacher in der Lagerhaltung und Anwendung.

Die verwendbaren Polyacrylate, die im allgemeinen in Dispersionsform vorliegen, sind bekannt. So werden beispielsweise Polymerisate von Acrylsäureestern und Methacrylsäureestern, die gegebenenfalls noch andere, zur Mischpolymerisation befähigte Monomere einpolymerisiert enthalten und die u. a. zum Appretieren und Beschichten von Textilien und Papier bekannt sind, eingesetzt (vergleiche z. B. »Ullmanns Encyklopädie der technischen Chemie«, Verlag Urban & Schwarzenberg, München, 14. Band (1963), Seiten 266 ff.).

Bevorzugt werden Dispersionen von vernetzungsfähigen Polyacrylaten eingesetzt. Auch diese Polymerisate gehören zum Stand der Technik. Die Vernetzungsfähigkeit der Polyacrylate wird durch Einpolymerisieren von Monomeren mit reaktionsfähigen Gruppen erzielt. Als reaktionsfähige Monomere kommen Verbindungen in Betracht, die neben einer polymerisierbaren Doppelbindung noch eine oder mehrere Epoxy-, Hydroxyl-, Amid-, N-Methylolamid-, N-Methylol-Allyl- bzw. N-Methylol-Metallylcarbamat- und N-Methyloläthergruppen, abgeleitet von niedrigen Alkoholen mit 1 bis 3 C-Atomen, insbesondere Methanol, oder andere bekannte reaktionsfähige Gruppen tragen (siehe »Ullmanns Encyklopädie der technischen Chemie«, loc. cit. Seite 274, GB-PS 1 345 123 und US-PS 3 352 710, 3 380 851 und 4 128 675). Besonders bevorzugt werden solche vernetzungsfähigen Polyacrylate zugemischt, die als reaktionsfähige Gruppen N-Methylol- und verätherte N-Methylolgruppen aufweisen. Selbstverständlich können die vernetzungsfähigen Polyacrylate auch in Mischung mit den nicht vernetzungsfähigen Polyacrylaten angewandt werden.

Die Polyacrylatdispersionen kommen mit etwa 30 bis 70 Gew.-% Feststoffgehalt in den Handel. Von diesen Dispersionen werden zur Herstellung der Flammschutzmittelformulierungen 20 bis 55, insbesondere 25 bis 50 Gew.-%, bezogen auf das gesamte Mittel, zugesetzt. Durch Wasserzugabe wird die Formulierung auf ca. 25 bis 50 Gew.-% Festsubstanz eingestellt. Die erfindungsgemäßen Flammschutzmittel werden zum Flammfestmachen von Cellulose- und cellulosehaltigen Materialien verwendet. Unter dem Begriff Materialien sind dabei Holz, Faserplatten, Papier und vor allem Textilien einschließlich Vliesen zu verstehen. Bei den Textilien kommt eine Flammfestausrüstung insbesondere bei Dekorationsmaterialien, Polsterstoffen, Vorhängen einschließlich Lichtschutzlamellen, in Betracht. Aber auch Nacht- und Bettwäsche, sowie Kinderbekleidung wird in zunehmendem Maße einer Flammfestausrüstung unterzogen. Die genannten Materialien bestehen vorzugsweise aus natürlicher und regenerierter Cellulose und deren Mischungen untereinander. Selbstverständlich können aber auch Mischgewebe, die neben dem Celluloseanteil zu einem geringen Teil Synthesefasern (Polyester-, Polyamid-und Polyacrylnitrilfasern) enthalten, erfindungsgemäß flammfest ausgerüstet werden.

Die Flammfestausrüstung wird in bekannter Weise durch Tränken, Sprühen, Tauchen, Foulardieren, Pflatschen usw. vorgenommen. Bei der bevorzugten Textilbehandlung wird das Flammschutzmittel, das von der Herstellung her einen Feststoffgehalt von etwa 45 bis 70 Gew.-% aufweist, in Mengen von 180 bis 500 g/l eingesetzt. Von den bevorzugt hergestellten Flammschutzmittelformulierungen ist eine entsprechende höhere Menge zu verwenden. Unter Umständen werden diese Flammschutzmittelformulierungen sogar direkt eingesetzt.

Die Flammfestausrüstung kann unabhängig davon, ob das Flammschutzmittel oder die Flammschutzmittelformulierung mit der Polyacrylatdispersion zum Einsatz kommen, zusätzlich mit einer Kunstharzausrüstung kombiniert werden. Als Kunstharze werden dabei besonders gern verätherte Melaminharze verwendet, aber auch andere bekannte Aminoplastverbindungen sind einsetzbar.

Das behandelte Material wird anschließend einer Wärmebehandlung unterzogen, d. h., es wird mehr oder weniger in einem Zug getrocknet und kondensiert, wobei aber auch Temperaturen bis zu 170° C auftreten können. Im Falle der gleichzeitigen Ausrüstung von Textilien mit Kunstharzen wird üblicherweise bei unter 110° C getrocknet und dann kurzzeitig auf Temperaturen von 120 bis 170° C erhitzt.

Der Gegenstand der vorliegenden Erfindung weist gegenüber dem Stand der Technik vor allem den Vorteil der größeren Stabilität der Flammschutzmittel auf. Daneben ist die sehr gute Verträglichkeit mit Polyacrylatdispersionen hervorzuheben, wodurch die Herstellung von vorteilhaften Flammschutzmittelformulierungen möglich wird. Schließlich ist als besonderer Vorteil noch zu erwähnen, daß bei der Ausrüstung mit den erfindungsgemäßen Flammschutzmitteln bzw. Flammschutzmittelformulierungen bei nachträglicher Anwendung höherer Temperaturen (über 160° C) praktisch keine Hitzevergilbung zu beobachten ist.

0 047 865

## Beispiel 1

### Herstellung des Flammschutzmittels

In einem 2-l-Dreihalskolben, ausgestattet mit Rührer und Rückflußkühler, werden

441 g  Formaldehyd (37 Gew.-%) eingefüllt und mit
164 g  Wasser verdünnt.

Es stellt sich eine Temperatur von 10 bis 20° C ein.
Anschließend werden unter Rühren

168 g  Dicyandiamid,
260 g  Monoammonphosphat und
70 g  Diammonphosphat

zugegeben.
Unter gleichzeitiger Auflösung der Feststoffe kommt es zu einer exothermen Reaktion, wobei die Temperatur des Ansatzes auf ca. 60° C steigt.
Danach wird der Ansatz innerhalb von 30 Minuten auf Rückflußtemperatur (100 bis 102° C) gebracht und unter Rückfluß 5 Stunden gehalten. Schließlich wird auf ca. 30° C unter Rühren gekühlt.
Es wird ein klares, farbloses, flüssiges Mittel mit einem pH-Wert von 4,5 bis 4,8 erhalten, welches eine Lagerbeständigkeit von mehr als 6 Monaten bei 20° C aufweist und mit Dispersionspolymerisaten auf Basis Acrylsäureester gut verträglich ist.

### Bereitung der Flammschutzmittelformulierung

Das wie oben beschrieben hergestellte Flammschutzmittel wird in einem nicht rostenden 5-l-Gefäß vorgelegt, mit

930 g  Wasser verdünnt und mit
13 g  Nonylphenolpolyglykoläther (9 Mol Äthylenoxyd je Mol Nonylphenol) unter Rühren versetzt.

Bei einer Temperatur von ca. 30° C werden

440 g  einer ca. 45%igen nichtionogenen Copolymerdispersion auf Basis Butylacrylat/2-Äthylhexylacrylat 4 : 1 (enthält ca. 5% N-Methylolacrylamid einpolymerisiert) und
280 g  einer ca. 50%igen handelsüblichen Copolymerdispersion auf Basis Butylacrylat

zugerührt.
Es wird auf diese Weise eine stabile Formulierung (Dichte bei 20° C ca. 1,12; pH-Wert 4,7 bis 5,0) erhalten, die bestens zur flammfesten, elastischen Steifausrüstung von cellulosehaltigen Geweben geeignet ist.

### Flammfestmachen von Cellulosematerial

Ein Baumwollgewebe mit Leinwandbindung (180 g/m²) wird mit einer wäßrigen Flotte, die im Liter

800 g  der oben beschriebenen Formulierung und
50 g  eines handelsüblichen Melaminharzes (mit $CH_3OH$ veräthertes Hexamethylolmelamin; Festsubstanz ca. 60%) enthält,

foulardiert (Flottenaufnahme 72%), bei 100° C getrocknet und 5 Minuten bei 160° C kondensiert.
Die Flammfesteffekte, bestimmt nach DIN 53 906, sind der folgenden Tabelle zu entnehmen:

| Anbrennzeit (Sek.) | 3 | 15 |
|---|---|---|
| Nachbrennzeit (Sek.) | 0 | 0 |
| Nachglimmzeit (Sek.) | 0 | 0 |
| Einbrennlänge (cm) | 3,7 | 11,3 |

Das Gewebe weist neben den sehr guten Flammfesteffekten eine gute Dimensionsstabilität und Sprungelastizität sowie einen fülligen, weichen Griff auf.

4

### Beispiel 2

### Herstellung des Flammschutzmittels

In der im Beispiel 1 beschriebenen Weise werden

220 g    Formaldehydlösung (30 Gew.-%),
26 g    Wasser,
84 g    Dicyandiamid,
130 g    Monoammonphosphat (Monoammoniumdihydrogenphosphat) und
35,5 g    Diammonphosphat (Diammoniummonohydrogenphosphat)

umgesetzt, wobei aber die Rückflußtemperatur nur 2,5 Stunden gehalten wird.

Es wird ein klares, farbloses, flüssiges Mittel mit einem pH-Wert von 4,7 erhalten, das über 4 Monate lagerbeständig ist.

Wird ein Flammschutzmittel nach dem Stand der Technik bei bis zu 70° C bereitet (FR-PS 791 983, Seite 1, Zeilen 28 ff.), so wird dasselbe nach 2 Tagen fest, weist also nur eine äußerst begrenzte Stabilität auf, und ist außerdem mit Polyacrylatdispersionen nicht verträglich.

### Bereitung der Flammschutzmittelformulierung

Entsprechend den Angaben im Beispiel 1 werden

260 g    des oben beschriebenen Flammschutzmittels,
230 g    Wasser,
3,4 g    des im Beispiel 1 beschriebenen Emulgators und
190 g    der im Beispiel 1 beschriebenen Dispersion des vernetzungsfähigen Copolymerisats

gemischt und eine stabile Formulierung vom pH-Wert 4,6 bis 4,8 erhalten.

### Flammfestmachen von Cellulosematerial

Ein Baumwollrenforcé (142 g/m²) wird mit einer wäßrigen Flotte, die im Liter

600 g   der oben beschriebenen Formulierung und
40 g   eines handelsüblichen Melaminharzes (mit $CH_3OH$ veräthertes Pentamethylolmelamin; Festsubstanz ca. 55%) enthält, foulardiert (Flottenaufnahme 68%), bei 80 bis 90° C getrocknet und 3 Minuten bei 170° C kondensiert.

Das so ausgerüstete Gewebe ist sehr gut flammfest und hat auch sonst die im Beispiel 1 angegebenen guten Eigenschaften.

### Beispiel 3

### Herstellung des Flammschutzmittels

In der im Beispiel 1 beschriebenen Weise werden

503 g   Formaldehydlösung (37 Gew.-%),
130 g   Wasser,
168 g   Dicyandiamid,
320 g   Monoammonphosphat und
60 g   Diammonphosphat

umgesetzt, wobei aber eine Temperatur von 97 bis 99° C über 7,5 Stunden gehalten wird.

Es wird ein klares, farbloses, flüssiges Mittel mit einem pH-Wert von 4,1 erhalten, das mindestens 4 Monate lagerbeständig ist.

### Bereitung der Flammschutzmittelformulierung

Entsprechend den Angaben im Beispiel 1 werden

560 g   des oben beschriebenen Flammschutzmittels,
470 g   Wasser,

7 g C$_{18}$-Fettalkoholpolyglykoläther (8 Mol Äthylenoxyd je Mol Fettalkohol) und
500 g einer ca. 45%igen handelsüblichen Copolymerdispersion auf Basis Butylacrylat/Vinylacetat 6 : 4 (enthält ca. 3% N-Methylolacrylamid einpolymerisiert)

gemischt und eine stabile Formulierung, deren pH-Wert mit Triäthanolamin auf 4,9 eingestellt wird, erhalten.

Eine gleich gute Formulierung wird erhalten, wenn

800 g der im Beispiel 3 der GB-PS 1 345 123 beschriebenen Copolymerdispersion an Stelle der oben verwendeten Copolymerdispersion zum Einsatz kommen.

## Flammfestmachen von Cellulosematerial

Ein Lowblendgewebe (82% Baumwoll- und 18% Polyamidfasern; 120 g/m$^2$) wird mit einer wäßrigen Flotte, die im Liter

800 g der oben beschriebenen Formulierung und
50 g mit CH$_3$OH veräthertes Dimethylolharnstoffharz (60 Gew.-%) enthält,

foulardiert (Flottenaufnahme ca. 63%), in üblicher Weise getrocknet und einige Minuten bei 155°C kondensiert.

Das sehr gut flammfest ausgerüstete Gewebe weist einen angenehmen, weichen Griff auf.

## Beispiel 4

### Herstellung des Flammschutzmittels

In der im Beispiel 1 beschriebenen Weise werden

222 g Formaldehydlösung (37 Gew-%),
98 g Wasser,
84 g Dicyandiamid,
175 g Monoammonphosphat und
42 g Diammonphosphat

umgesetzt, wobei aber die Rückflußtemperatur über 4 Stunden gehalten wird.

Es wird ein klares, farbloses, flüssiges Mittel mit einem pH-Wert von 4,4 bis 4,5 erhalten, das über 12 Monate lagerbeständig ist.

### Bereitung der Flammschutzmittelformulierung

Entsprechend den Angaben im Beispiel 1 werden

280 g des oben beschriebenen Flammschutzmittels,
500 g Wasser,
4 g des im vorigen Beispiel beschriebenen Emulgators und
500 g einer ca. 50%igen schwach anionaktiven Polymerisatdispersion auf Basis Butylacrylat

gemischt und eine stabile Formulierung vom pH-Wert 4,7 bis 4,8 erhalten.

### Flammfestmachen von Cellulosematerial

Ein Baumwoll/Viskosezellwollmischgewebe 50 : 50 (155 g/m$^2$) wird mit einer wäßrigen Flotte, die im Liter

900 g der oben beschriebenen Formulierung und
45 g des im Beispiel 1 genannten Melaminharzes enthält,

foulardiert (Flottenaufnahme ca. 70%), bei etwa 100°C getrocknet und 5 Minuten bei 160°C kondensiert.

Es wird ein sehr gut flammfestes Gewebe erhalten mit einem fülligen, etwas steifen Griff.

6

## Beispiel 5

### Herstellung des Flammschutzmittels

In der im Beispiel 1 beschriebenen Weise werden

840 g  Formaldehydlösung (30 Gew.-%),
102 g  Wasser,
252 g  Dicyandiamid,
449 g  Monoammonphosphat und
65 g  Diammonphosphat

umgesetzt.
Es wird ein klares, farbloses, flüssiges Mittel mit einem pH-Wert von ca. 4,2 erhalten, das über 6 Monate lagerbeständig ist.

### Flammfestmachen von Cellulosematerial

Der im Beispiel 2 genannte Baumwollrenforcé wird mit einer wäßrigen Flotte, die im Liter

250 g  des oben beschriebenen Flammschutzmittels enthält,

foulardiert (Flottenaufnahme ca. 68%), und bei 120° C 12 Minuten getrocknet.
Das so behandelte Gewebe weist einen sehr guten Flammfesteffekt mit einem steifen Griff auf.

### Patentansprüche

1. Verfahren zur Herstellung von Flammschutzmitteln aus Dicyandiamid, Ammonphosphaten und Formaldehyd, dadurch gekennzeichnet, daß Dicyandiamid, Mono-, Diammonphosphat und Formaldehyd im Molverhältnis 1 : 1,0 bis 1,7 : 0,03 bis 0,4 : 2,2 bis 3,2 mindestens 1,5 Stunden auf mindestens 95° C erhitzt werden, wobei sich ein pH-Wert von mindestens 3,8 einstellt.

2. Verfahren nach Patentanspruch 1, dadurch gekennzeichnet, daß Dicyandiamid, Mono-, Diammonphosphat und Formaldehyd im Molverhältnis 1 : 1,1 bis 1,5 : 0,1 bis 0,3 : 2,5 bis 3,0 3 bis 8 Stunden auf 98° C bis Rückflußtemperatur erhitzt werden, wobei sich ein pH-Wert von 4,2 bis 5,5 einstellt.

3. Flammschutzmittel hergestellt nach Patentanspruch 1 und 2.

4. Flammschutzmittel nach Patentanspruch 3, dadurch gekennzeichnet, daß Polyacrylatdispersionen in Mengen von 20 bis 55, insbesondere 25 bis 50 Gew.-%, bezogen auf das gesamte Mittel, zugegeben werden.

5. Flammschutzmittel nach Patentanspruch 4, dadurch gekennzeichnet, daß Dispersionen von vernetzungsfähigen Polyacrylaten zugegeben werden.

6. Verwendung der Mittel nach Patentanspruch 3 bis 5 zum Flammfestmachen von Cellulose- und cellulosehaltigen Materialien.

### Claims

1. Process for the preparation of flame-proofing agents from dicyan-diamide, ammonium phosphates and formaldehyde, characterized in that dicyan-diamide, mono-, diammonium phosphate and formaldehyde in the molar ratio 1 : 1.0 to 1.7 : 0.03 to 0.4 : 2.2 to 3.2 are heated for at least 1.5 hours to at least 95° C, in which a pH-value of at least 3.8 is set.

2. Process according to Patent Claim 1, characterized in that dicyan-diamide, mono-, diammonium phosphate and formaldehyde in the molar ratio 1 : 1.1 to 1.5 : 0.1 to 0.3 : 2.5 to 3.0 are heated from 3 to 8 hours to 98° C up to reflux temperature, in which a pH-value of from 4.2 to 5.5 is set.

3. Flame-proofing agents produced according to Patent Claim 1 and 2.

4. Flame-proofing agents according to Patent Claim 3, characterized in that polyacrylate dispersions are added in quantities of from 20 to 55, in particular 25 to 50%-wt. in relation to the agent as a whole.

5. Flame-proofing agents according to Patent Claim 4, characterized in that dispersions of polyacrylates are added which are able to be cross-linked.

6. Application of the agents according to Patent Claim 3 to 5 for the flame-proofing of cellulose materials and materials containing cellulose.

**Revendications**

1. Procédé pour la préparation d'agents ignifugeants, à partir de dicyanodiamide, de phosphates d'ammonium et de formaldéhyde, caractérisé en ce qu'on chauffe du dicyanodiamide, du phosphate de monoammonium, du phosphate de diammonium et du formaldéhyde selon un rapport molaire de 1 : 1,0 à 1,7 : 0,03 à 0,4 : 2,2 à 3,2 pendant au moins une heure et demie jusqu'à 95°C au moins, de sorte que l'on obtient un pH d'au moins 3,8.

2. Procédé selon la revendication 1, caractérisé en ce que l'on chauffe du dicyanodiamide, du phosphate de monoammonium, du phosphate de diammonium et du formaldéhyde selon un rapport molaire de 1 : 1,1 à 1,5 : 0,1 à 0,3 : 2,5 à 3,0 pendant 3 à 8 heures jusqu'à 98°C à la température du reflux, de sorte que l'on obtient un pH de 4,2 à 5,5.

3. Agent ignifugeant, prèparè selon les revendications 1 et 2.

4. Agent ignifugeant selon la revendication 3, caractérisé en ce qu'on ajoute des dispersions de polyacrylate en des quantités de 20 à 55, en particulier 25 à 50, % en poids, par rapport à la totalité de l'agent.

5. Agent ignifugeant selon la revendication 4, caractérisé en ce qu'on ajoute des dispersions de polyacrylates réticulables.

6. Utilisation de l'agent selon les revendications 3 à 5 pour ignifuger des matières cellulosiques et contenant de la cellulose.